(19) Europäisches Patentamt

European Patent Office

Office européen des brevets

(11) Veröffentlichungsnummer: **0 267 536 B1**

(12) **EUROPÄISCHE PATENTSCHRIFT**

(45) Veröffentlichungstag der Patentschrift: **13.05.92**

(21) Anmeldenummer: **87116260.8**

(22) Anmeldetag: **05.11.87**

(51) Int. Cl.⁵: **G02B 6/38**, G02B 6/44

(54) **Hermetisch dichte Glasfaserdurchführung.**

(30) Priorität: **12.11.86 DE 3638594**
**12.11.86 DE 3638595**

(43) Veröffentlichungstag der Anmeldung:
**18.05.88 Patentblatt 88/20**

(45) Bekanntmachung des Hinweises auf die
Patenterteilung:
**13.05.92 Patentblatt 92/20**

(84) Benannte Vertragsstaaten:
**AT BE CH DE ES FR GB IT LI NL SE**

(56) Entgegenhaltungen:
**EP-A- 0 111 264**
**WO-A-84/04176**
**WO-A-85/03361**
**GB-A- 2 022 280**
**GB-A- 2 137 375**

**PATENT ABSTRACTS OF JAPAN, Band 6, Nr.
248 (P-160)[1126], 7. Dezember 1982; & JP - A
- 57 146 207**

**PATENT ABSTRACTS OF JAPAN, Band 8, Nr.
75 (P-266)[1512], 7. April 1984; & JP - A - 58
219 506**

(73) Patentinhaber: **Standard Elektrik Lorenz Aktiengesellschaft
Lorenzstrasse 10
W-7000 Stuttgart 40(DE)**

(72) Erfinder: **Rossberg, Rolf
Thüringer Strasse 17
W-7141 Schwieberdingen(DE)**

(74) Vertreter: **Gähr, Hans-Dieter, Dipl.-Ing. (FH) et
al
Standard Elektrik Lorenz AG Patent- und Lizenzwesen Postfach 30 09 29
W-7000 Stuttgart 30(DE)**

**Beschreibung**

Die Erfindung betrifft eine Glasfaser-Durchführung der im Ausführung.

Derartige Durchführungen werden beispielsweise in der optischen Nachrichten-Übermittlungstechnik verwendet, insbesondere für hermetisch dicht verschlossene Gehäuse von elektrooptischen oder optoelektrischen Bauelementen, die gegen Umwelteinflüsse geschützt sein müssen.

Eine Glasfaser-Durchführung nach dem Oberbegriff des Anspruchs 1 ist bereits aus der GB-A-2 137 375 bekannt. Die darin beschriebenen Ausführungsbeispiele beziehen sich auf einen optischen Unterwasserverstärker, bei dem ein blankes Stück Glasfaser so in eine im Durchmesser größere Bohrung eines Metallkörpers eingelötet ist, daß das bei der Herstellung der Durchführung am offenen Ende der Bohrung herausquellende Lot einen konischen oder glockenförmigen Lotkörper bildet. Der Lotkörper und die davor freiliegende Glasfaser, die zu einem Faserträger weitergeführt ist, erstrecken sich durch eine Kammer, welche ein fetthaltiges, flüssiges Füllmittel oder eine Paste enthält und von einer das Auslaufen des Füllmittels verhindernden elastischen Schutzkappe abgedeckt ist. Wegen der elastischen Schutzkappe kann sich ein z.B. am Meeresboden herrschender Wasserdruck gleichmäßig auf den Lotkörper übertragen und der Anpreßdruck einen zusätzlichen Abdichtungseffekt bewirken.

In der JP-A-58-219506 ist außerdem eine hermetisch dichte Glasfaser-Durchführung beschrieben, bei der ein mit Kupfer metallisiertes, blankes Stück Glasfaser in eine Bohrung des Durchführungskörpers eingelötet ist. Mit eingelötet ist eine aus der Bohrung hervorstehende Metallhülse, durch welche der nicht abgemantelte Teil der Glasfaser hindurchgeführt und in einer trichterförmigen Erweiterung am freien Ende der Metallhülse mit einem Kleber fixiert ist.

Ferner ist auch aus den Druckschriften DE 27 21 991 A1 und DE 30 46 415 A1 bekannt, die Glasfaser vor dem Einlösen zu metallisieren. An die Metallisierung werden dabei verschiedene Qualitätsansprüche gestellt. Einerseits muß sie auf der Glasfaser sehr gut haften. Andererseits muß die Metallisierung gut lötbar sein. Gute Haftung setzt voraus, daß die Faseroberfläche sehr sauber ist. Um dies zu erreichen, muß die Oberfläche sorgfältig gereinigt werden, was meist in mehreren alternativen Verfahrensschritten vorgenommen wird. Wie z.B. Tauchen der Glasfaser in heiße Schwefelsäure mit nachfolgendem Spülen in deionisiertem Wasser und anschließendem Trocknen. Oder chemisches Anätzen der Glasfaser in Flußsäure mit anschließendem Spül- und Trocknungsvorgang.

Da aber gut haftende Schichten meist nicht oder nur schlecht lötbar sind, müssen mehrere Metallschichten entweder nacheinander oder gleichzeitig als Mischung aufgebracht werden. Dies kann im Vakuum durch Aufdampfen oder Sputtern geschehen oder naßchemisch vorgenommen werden. Hierzu sind Geräte und Vorrichtungen sowie Mittel erforderlich, die zwar bei der Fertigung von Glasfaser-Durchführungen zur Verfügung stehen, jedoch nicht im Feld. Das bedeutet aber, daß Glasfasern an Montageorten von optischen Übermittlungseinrichtungen praktisch nicht metallisiert und demzufolge nicht gelötet werden können.

Selbst in der Fertigung treten beim Metallisieren von Glasfasern noch Probleme auf, da die Faser insbesondere an der Grenze von unbehandelter zu behandelter Oberfläche oder am Übergang zur Metallisierung hin leicht brechen kann. Außerdem wurde festgestellt, daß die Metallisierung dazu neigt, sich beim Löten aufzulösen, wodurch die Haftung gemindert wird oder gänzlich verlorengeht. Daher kann es beim Erkalten des flüssigen Lotes in der Metallhülse dazu kommen, daß sich das Lot von der Glasfaser löst und feine Kapillaren hinterläßt. Die Verbindung ist dann nicht hermetisch dicht. Außerdem kann die Faser bei Zugbeanspruchung aus dem Lot herausgleiten.

Der Erfindung liegt die Aufgabe zugrunde, eine mit geringem Aufwand herstellbare, hermetisch dichte Glasfaser-Durchführung zu schaffen, bei welcher das zur Fixierung verwendete Lot auf die blanke Glasfaser aufschrumpfen kann und das Lot zur Sicherstellung der Dichtigkeit eine definierte Höhe in axialer Richtung der Glasfaser hat.

Diese Aufgabe wird erfindungsgemäß mit den im Anspruch 1 angegebenen konstruktiven Maßnahmen gelöst. Weitere Lösungen der der Erfindung zugrundeliegenden Aufgabe sind in den Patentansprüchen 9 und 14 angegeben. Zweckmäßige Ausgestaltungen des Gegenstandes gemäß den Patentansprüchen 1, 9 und 14 sind den Unteransprüchen zu entnehmen.

Mit der Erfindung sind verschiedene Vorteile erzielbar. Die Durchführung weist einen hohen und zuverlässigen Dichtigkeitsgrad auf, welcher selbst bei der Herstellung von Durchführungen im Feld erreicht wird. Weitere Vorteile sind in der nachfolgenden Beschreibung angegeben.

Die Erfindung wird nun anhand von in Zeichnungen dargestellten Ausführungsbeispielen näher erläutert.

In den Zeichnungen zeigen:

Fig. 1    einen Ausschnitt einer hermetisch dichten Glasfaser-Durchfürung längsgeschnitten;

Fig. 2    einen Ausschnitt einer Glasfaser-Durchführung mit an einer Außenseite der Durchführung befestigter La-

Fig. 3 die Lasche der Fig. 2, in der Draufsicht;

Fig. 4 einen Ausschnitt einer Glasfaser-Durchführung mit vor der Durchführung angeordneter Hülse, längsgeschnitten;

Fig. 5 einen Ausschnitt einer Glasfaser-Durchführung mit vor der Durchführung angeordnetem Ring, längsgeschnitten;

Fig. 6 einen Ausschnitt einer aus zwei Hülsen bestehenden Glasfaser-Durchführung mit zwischen den Hülsen angeordnetem Lotkörper, längsgeschnitten.

Fig. 7 einen Ausschnitt einer in der Öffnung einer Gehäusewand befestigten hermetisch dichten Glasfaser-Durchführung, teilweise längsgeschnitten;

Fig. 8 einen Ausschnitt der zum Einlöten einer Glasfaser vorbereiteten Metallhülse, im Längsschnitt;

Fig. 9 das mit einer Ausnehmung versehene Vorderteil einer Metallhülse, in perspektivischer Ansicht;

Fig. 10 das Metallhülsen-Vorderteil der Fig. 9, im Längsschnitt;

Fig. 11 das Vorderteil einer Metallhülse mit einer in der Form abgewandelten Ausnehmung, in perspektivischer Ansicht;

Fig. 12 das Metallhülsen-Vorderteil der Fig. 11, im Längsschnitt.

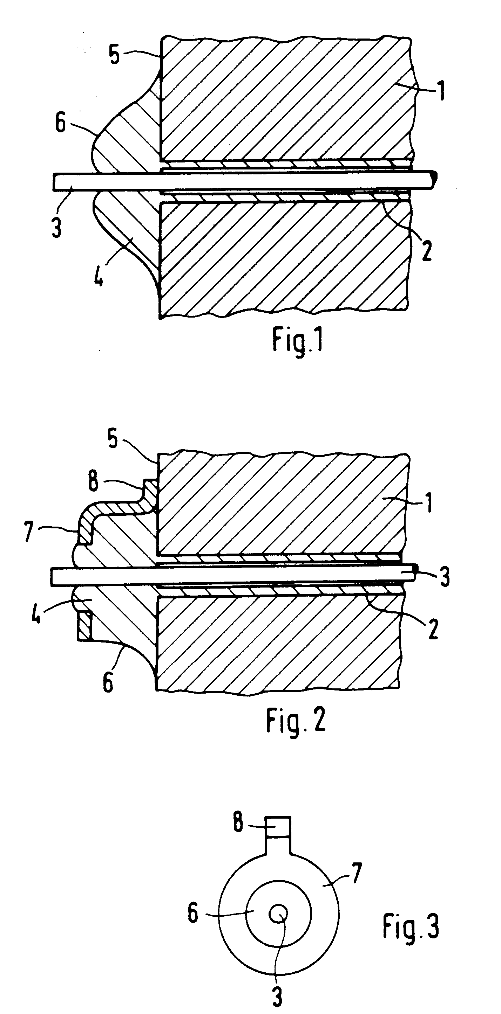

In den Zeichnungen ist ein erstes Metallteil der hermetisch dichten Glasfaser-Durchführung mit 1 bezeichnet. Bei dem in den Fig. 1, 2 und 4 dargestellten ersten Metallteil 1 handelt es sich vorzugsweise um die Wand eines hermetisch dicht gekapselten Gehäuses oder um eine Halteplatte, die beispielsweise innerhalb eines derartigen Gehäuses angeordnet sein kann. Das Metallteil 1 durchsetzt eine Bohrung 2, in der die hindurchgeführte Glasfaser 3 mittels Einlöten befestigt ist. Die Glasfaser 3 ist ein vom Primärcoating befreites blankes, nicht metallisiertes Ende eines Lichtwellenleiters. Beim Löten wird die Bohrung 2 entweder vollständig oder wenigstens auf einer Teillänge mit Lot 4 gefüllt und außerhalb der Bohrung 2 an wenigstens einer Außenseite 5 des Metallteiles 1 ein Lotkörper 6 z.B. in Form einer Lötperle ausgebildet.

Beim Erkalten des Lotes 4 schrumpft es außerhalb der Bohrung 2 auf die blanke Glasfaser 3 und umschließt diese hermetisch dicht. Innerhalb der Bohrung 2 löst es sich hingegen beim Schrumpfen von der Glasfaser 3 und geht eine hermetisch feste Verbindung mit der benetzten Bohrungswandung ein. Auf diese Weise bildet der Übergang zwischen dem innerhalb der Bohrung 2 und dem außerhalb dieser befindlichen Lot 4 eine hermetische Abdichtung zwischen Metallteil 1 und Glasfaser 3. Die unterschiedlichen Ausdehnungskoeffizienten der beiden Werkstoffe bewirken außerdem einen festen, torsionsfreien Sitz der Glasfaser 3 im Lot 4. Bei einer unzulässigen Zugbeanspruchung bricht sie nicht innerhalb oder an der Lötstelle, sondern davon entfernt.

In Fig. 2 ist der an der Außenseite 5 mit dem Metallteil 1 fest verbundene Lotkörper 6 mit einem die Lothöhe in Axialrichtung der Glasfaser 3 begrenzenden zweiten Metallteil 7 verbunden. Dadurch wird nicht nur die Höhe des Lotkörpers 6 bestimmt, sondern auch eine die Dichtigkeit sicherstellende Mindesthöhe des Lotkörpers 6 gewährleistet. Dieses zweite Metallteil 7 ist bei dem dargestellten Ausführungsbeispiel eine aus Blech gestanzte Lasche (Fig. 3) mit einem Haltelappen, dessen freies Ende 8 an der Außenseite 5 des ersten Metallteiles 1 befestigt ist. Anstelle der Lasche kann auch ein einfacher Drahtbügel die Höhenbegrenzung des Lotkörpers 6 bilden. Entscheidend ist, daß Vorkehrungen getroffen sind, die beim Erkalten des Lotes 4 ein weitgehend ungehindertes Schrumpfen um die Glasfaser 3 herum ermöglichen.

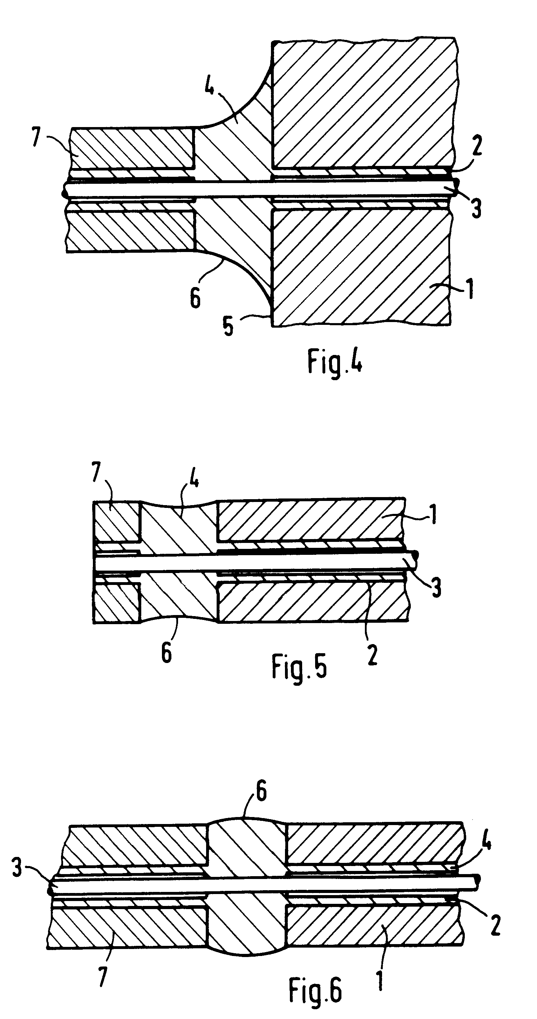

Bei den in den Fig. 4 bis 6 dargestellten Ausführungsbeispielen von hermetisch dichten Glasfaser-Durchführungen werden die zweiten Metallteile 7 beim Löten mit einem einfachen Werkzeug im gewünschten Abstand zum ersten Metallteil gehalten. Nach dem Erstarren des Lotes 4 ist sowohl die Glasfaser 3 hermetisch dicht eingebettet als auch das zweite Metallteil 7 durch den Lotkörper 6 mechanisch am ersten Metallteil 1 befestigt. Die mit dem Lotkörper 6 verbundenen zweiten Metallteile 7 können als Faserendhülse, Ring, Lochscheibe, Halteplatte oder Wand eines zweiten Gehäuses ausgebildet sein. Wie die Fig. 5 und 6 zeigen, bestehen hier die ersten Metallteile 1 ebenfalls aus Hülsen, zwischen deren Stirnseiten der Lotkörper 6 angeordnet ist.

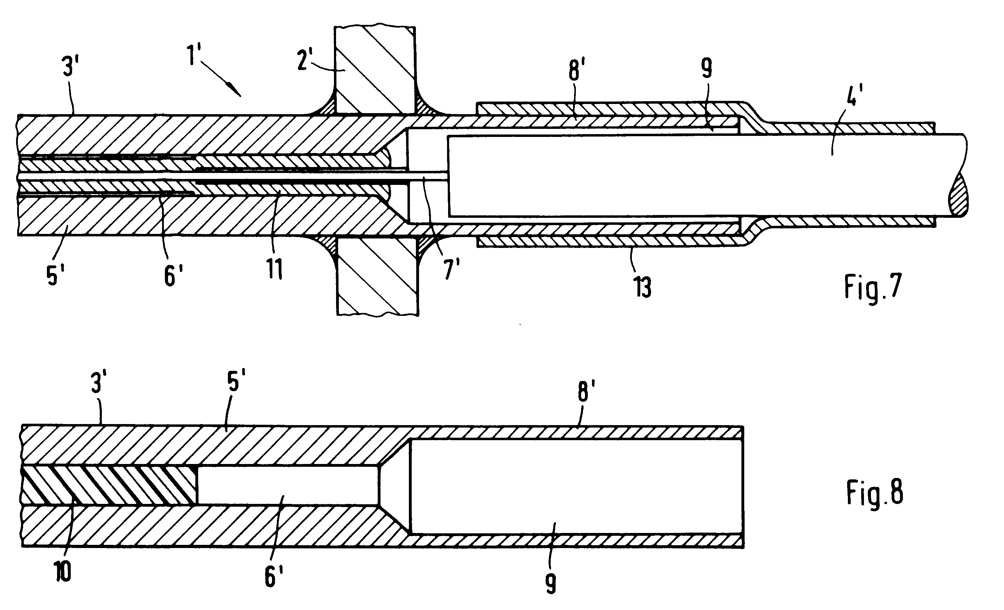

In Fig. 7 steckt die hermetisch dichte Durchführung 1' in der Öffnung, z.B. einer Gehäusewand 2', an der sie ebenfalls hermetisch dicht befestigt ist. Die Durchführung besteht aus einer Metallhülse 3' mit darin fixierter Lichtleitader 4'. Das Vorderteil 5' der Metallhülse 3' enthält eine im Durchmesser relativ kleine Aufnahmebohrung 6' für die blanke Glasfaser 7' und der rückwärtige Hülsenteil 8' eine im Durchmesser größere Bohrung 9 zur Aufnahme eines Teiles der vollständigen Lichtleitader 4'.

Bei dem in Fig. 7 und 8 dargestellten Ausführungsbeispiel der Durchführung 1' wird nach Herstellung der Metallhülse 3' die Wandung einer Teillänge der Aufnahmebohrung 6' mit einem nicht lötbaren Überzug 10 versehen. Dieser beispielsweise aus Lötstopplack oder einer oxydierten Oberfläche der Bohrungswandung bestehende Überzug 10 kann je nach Zweckmäßigkeitserwägungen entweder im vorderen Teil oder im rückwärtigen Teil der Aufnahmebohrung 6′ angeordnet sein.

In die nun mittels Temperieren zum Löten vorbereitete Metallhülse wird die zuvor mit üblichen Mitteln von der äußeren Umhüllung und dem Primärcoating befreite Glasfaser 7′ hindurchgeführt und im Lötbad gelötet. Nach der Badentnahme kühlen Metallhülse 3′ und Lötstelle ab, wobei das erstarrende Lot 11 im Bereich des unbenetzt gebliebenen Überzugs 10 auf die blanke Glasfaser 7′ schrumpft und diese hermetisch dicht umschließt. Im überzugsfreien Bereich der Aufnahmebohrung 6′ löst sich das Lot 11 beim Erstarren von der Glasfaser 7′ und verbindet sich hermetisch fest mit der benetzten Bohrungswandung. Auf diese Weise bildet der Übergang von einem zum anderen Lötstellenbereich eine hermetische Abdichtung zwischen Metallhülse 3′ und Glasfaser 7′, die wegen der unterschiedlichen thermischen Ausdehnungskoeffizienten auf einer Teillänge torsionsfrei und fest im Lot 11 sitzt. Bei einer unzulässigen Zugbeanspruchung bricht sie nicht innerhalb oder an der Lötstelle, sondern irgendwo entfernt davon. Zur Vermeidung der Übertragung von unbeabsichtigter Zugbeanspruchung auf die Glasfaser 7′ wird die Lichtleitader 4′ in die rückwärtige Bohrung 9 eingeklebt und/oder mittels eines den rückwärtigen Hülsenteil 8′ umfassenden Schrumpfschlauches 13 an der Metallhülse 3′ befestigt.

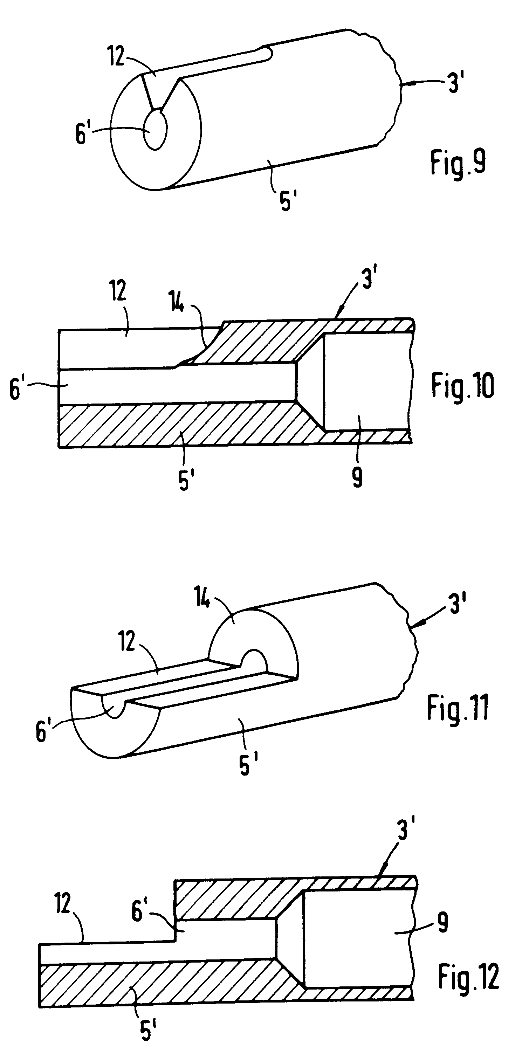

Andere Ausführungsbeispiele von Metallhülsen 3′, die beim Erkalten der Lötstelle ein Aufschrumpfen des Lotes 11 auf die blanke Glasfaser 7′ gewährleisten, sind in den Fig. 9 bis 12 dargestellt. Um eine vollständige Benetzung der Bohrungswandung mit Lot 11 zu verhindern, ist hier anstelle des nicht lötbaren Überzuges ein Teil der Wandung entfernt. Dies wird dadurch erreicht, daß die Metallhülse 3′ im Vorderteil 5′ mit einer die Aufnahmebohrung 6′ teilweise freilegenden Ausnehmung 12 versehen wird. Weil die hier freiliegende Glasfaser 7′ beim Einlöten auf dem flüssigen Lot 11 schwimmen würde, muß sie bis zum Erstarren des Lotes niedergehalten werden.

Hierdurch wird ebenfalls erreicht, daß das Lot 11 im Bereich der Ausnehmung 12 die blanke, nicht metallisierte Glasfaser 7′ hermetisch dicht umschließt. Im ausnehmungsfreien Bereich der Aufnahmebohrung 6′ ist das Lot 11 dagegen primär mit der Bohrungswandung hermetisch dicht verbunden.

Die Ausnehmung 12 kann z.B. ein sich in Axialrichtung der Aufnahmebohrung 6′ erstreckender Schlitz mit parallelen oder V-förmig zueinander stehenden Seitenwänden sein oder auch aus einem den Querschnitt der Metallhülse 3′ reduzierenden Anschnitt bestehen. Die Ausnehmung 12 kann sowohl am vorderen Ende der Metallhülse 3′ beginnen als auch so im weiter zurückliegenden Bereich des Vorderteiles 5′ angeordnet sein, daß vorn ein unversehrter Hülsenabschnitt vorhanden ist. Die Enden 14 der Ausnehmung 12 können dabei durch eine gekrümmte, schräge oder senkrecht zur Hülsenachse verlaufende Fläche 14 begrenzt sein.

## Patentansprüche

1. Hermetisch dichte Durchführung für eine Glasfaser (3), mit einem Metallteil (1), in dem die Faser in einer Bohrung (2) mittels Einlöten befestigt ist, bei der das Lot (4) außerhalb der Bohrung (2) zu einem Lotkörper (6) ausgebildet ist, der die blanke' nicht metallisierte Glasfaser (3) hermetisch dicht umschließt, und bei der das Lot (4) sowohl mit der Außenseite (5) des Metallteiles (1) als auch wenigstens auf einer Teillänge mit der Bohrungswandung fest verbunden ist,
   **dadurch gekennzeichnet,** daß der mit dem Metallteil (1) fest verbundene Lotkörper (6) mit einem die Lothöhe in Axialrichtung der Glasfaser (3) begrenzenden zweiten Metallteil (7) verbunden ist.

2. Hermetisch dichte Durchführung nach Anspruch 1, dadurch gekennzeichnet, daß das zweite Metallteil (7) eine am ersten Metallteil befestigte Lasche ist.

3. Hermetisch dichte Durchführung nach Anspruch 1, dadurch gekennzeichnet, daß das zweite Metallteil (7) ein am ersten Metallteil (1) befestigter Drahtbügel ist.

4. Hermetisch dichte Durchfuhrung nach Anspruch 1, dadurch gekennzeichnet, daß das die Lothöhe des Lotkörpers (6) begrenzende zweite Metallteil (7) ein Ring ist.

5. Hermetisch dichte Durchführung nach Anspruch 1, dadurch gekennzeichnet, daß das die Lothöhe des Lotkörpers (6) begrenzende zweite Metallteil (7) eine Hülse ist.

6. Hermetisch dichte Durchführung nach Anspruch 1, dadurch gekennzeichnet, daß das die Lothöhe des Lotkörpers (6) begrenzende zweite Metallteil (7) eine Wand ist.

7. Hermetisch dichte Durchführung nach Anspruch 1, dadurch gekennzeichnet, daß das mit dem Lotkörper (6) fest verbundene erste Metallteil (1) eine Wand ist.

**8.** Hermetisch dichte Durchführung nach Anspruch 1, dadurch gekennzeichnet, daß das mit dem Lotkörper (6) fest verbundene erste Metallteil (1) eine Hülse ist.

**9.** Hermetisch dichte Durchführung (1') für eine Glasfaser (7'), mit einem Metallteil, in dem die Faser in einer Aufnahmebohrung (6') mittels Einlöten befestigt ist, dadurch gekennzeichnet, daß das Metallteil eine Metallhülse (3') ist, deren innere Wandung auf einer Teillänge der Aufnahmebohrung (6') einen nicht lötbaren Überzug (10) aufweist und daß das Lot (11) im Bereich der nicht lötbaren Teillänge der Aufnahmebohrung (6') die blanke, nicht metallisierte Faser (7') hermetisch dicht umschließt, wogegen es im Bereich der lötbaren Teillänge der Aufnahmebohrung (6') mit deren innerer Wandung fest verbunden ist.

**10.** Hermetisch dichte Durchführung nach Anspruch 9, dadurch gekennzeichnet, daß der Überzug (10) die innere Wandung des der Einführrichtung der Faser (7') zugewandten Teiles der Aufnahmebohrung (6') bedeckt.

**11.** Hermetisch dichte Durchfuhrung nach Anspruch 9, dadurch gekennzeichnet, daß der Überzug (10) die innere Wandung des der Einführrichtung der Faser (7') abgewandten Teiles der Aufnahmebohrung (6') bedeckt.

**12.** Hermetisch dichte Durchführung nach einem der Ansprüche 9 bis 11, dadurch gekennzeichnet, daß der Überzug (10) aus Lötstopplack besteht.

**13.** Hermetisch dichte Durchführung nach einem der Ansprüche 9 bis 11, dadurch gekennzeichnet, daß der Überzug (10) aus einer oxydierten Oberfläche der Aufnahmebohrung (6') besteht.

**14.** Hermetisch dichte Durchführung (1') einer Glasfaser (7') durch ein Metallteil, in dem die Faser in einer Aufnahmebohrung (6') mittels Einlöten befestigt ist, dadurch gekennzeichnet, daß das Metallteil eine Metallhülse (3') ist, die eine die Aufnahmebohrung (6') teilweise freilegende Ausnehmung (12) aufweist und daß das Lot (11) im Bereich der Ausnehmung (12) die blanke, nicht metallisierte Faser (7') hermetisch dicht umschließt, wogegen es im ausnehmungsfreien Bereich der Aufnahmebohrung (6') mit deren innerer Wandung fest verbunden ist.

**15.** Hermetisch dichte Durchführung nach Anspruch 14, dadurch gekennzeichnet, daß die Ausnehmung (12) im vorderen Teil der die Aufnahmebohrung (6') enthaltenden Metallhülse (3') angeordnet ist.

**16.** Hermetisch dichte Durchführung nach Anspruch 14, dadurch gekennzeichnet, daß die Ausnehmung (12) im rückwärtigen Teil der die Aufnahmebohrung (6') enthaltenden Metallhülse (3') angeordnet ist.

**17.** Hermetisch dichte Durchführung nach einem der Ansprüche 14 bis 16, dadurch gekennzeichnete, daß die Ausnehmung (12) ein sich in Axialrichtung der Aufnahmebohrung (6') erstreckender Schlitz ist.

**18.** Hermetisch dichte Durchführung nach einem der Ansprüche 14 bis 16, dadurch gekennzeichnet, daß die Ausnehmung (12) aus einem den Querschnitt der Metallhülse (3') reduzierenden Anschnitt besteht.

**Claims**

**1.** Hermetically sealed bushing for a glass fiber (3), comprising a metal part (1) in which the fiber is fixed in a hole (2) by soldering, wherein the solder (4) outside the hole (2) forms a solder body (6) which hermetically surrounds the bare, unmetallized glass fiber (3), and wherein the solder (4) is permanently connected both with the outside (5) of the metal part (1) and with the wall of the hole over at least part of the length of said wall, **characterized in** that the solder body (6), which is permanently connected with the metal part (1), is connected with a second metal part (7) limiting the height of the solder in the longitudinal direction of the glass fiber (3).

**2.** A hermetically sealed bushing as claimed in claim 1, characterized in that the second metal part (7) is a shackle attached to the first metal part.

**3.** A hermetically sealed bushing as claimed in claim 1, characterized in that the second metal part (7) is a wire stirrup attached to the first metal part (1).

**4.** A hermetically sealed bushing as claimed in claim 1, characterized in that the second metal part (7), which limits the height of the solder body (6), is a ring.

5. A hermetically sealed bushing as claimed in claim 1, characterized in that the second metal part (7), which limits the height of the solder body (6), is a sleeve.

6. A hermetically sealed bushing as claimed in claim 1, characterized in that the second metal part (7), which limits the height of the solder body (6), is a wall.

7. A hermetically sealed bushing as claimed in claim 1, characterized in that the first metal part (1), which is permanently connected with the solder body (6), is a wall.

8. A hermetically sealed bushing as claimed in claim 1, characterized in that the first metal part (1), which is permanently connected with the solder body (6), is a sleeve.

9. Hermetically sealed bushing (1') for a glass fiber (7'), comprising a metal part in which the fiber is fixed in a hole (6') by soldering, characterized in that the metal part is a metal sleeve (3') whose inner wall has a nonsolderable coating (10) over part of the length of the hole (6'), and that the solder (11) hermetically surrounds the bare, unmetallized fiber (7') in the area of the nonsolderable part of the hole (6'), while in the area of the solderable part of the hole (6'), the solder (11) firmly adheres to the inner hole wall.

10. A hermetically sealed bushing as claimed in claim 9, characterized in that the coating (10) covers the inner wall of that portion of the hole (6') which faces the direction of feedthrough of the fiber (7').

11. A hermetically sealed bushing as claimed in claim 9, characterized in that the coating (10) covers the inner wall of that portion of the hole (6') which does not face the direction of feedthrough of the fiber (7').

12. A hermetically sealed bushing as claimed in any one of claims 9 to 11, characterized in that the coating (10) is a solder resist.

13. A hermetically sealed bushing as claimed in any one of claims 9 to 11, characterized in that the coating (10) is formed by an oxidized surface of the hole (6').

14. Hermetically sealed bushing (1') for feeding a glass fiber (7') through a metal part in which the fiber is fixed in a hole (6') by soldering, characterized in that the metal part is a metal sleeve (3') which has a recess (12) partly exposing the hole (6'), and that in the area of the recess (12), the solder (11) hermetically surrounds the bare, unmetallized fiber (7'), while in that area of the hole (6') which does not have a recess, the solder (11) is permanently connected with the inner hole wall.

15. A hermetically sealed bushing as claimed in claim 14, characterized in that the recess (12) is located in the front portion of the metal sleeve (3') containing the hole (6').

16. A hermetically sealed bushing as claimed in claim 14, characterized in that the recess (12) is located in the rear portion of the metal sleeve (3') containing the hole (6').

17. A hermetically sealed bushing as claimed in any one of claims 14 to 16, characterized in that the recess (12) is a slot extending in the longitudinal direction of the hole (6').

18. A hermetically sealed bushing as claimed in any one of claims 14 to 16, characterized in that the recess (12) is a cut reducing the cross section of the metal sleeve (3').

**Revendications**

1. Traversée étanche pour une fibre en verre (3), comprenant une partie métallique (1), dans laquelle la fibre est fixée par brasage dans un alésage (2), dans laquelle la brasure (4) est réalisée à l'extérieur de l'alésage (2), en formant un corps de brasage (6), qui entoure de façon fermée hermétiquement la fibre en verre (3) nue, non métallisée, et dans laquelle la brasure (4) est reliée rigidement tant à la face extérieure (5) de la partie métallique (1) qu'également, au moins sur une partie de sa longueur, à la paroi de l'alésage, caractérisée en ce que le corps de brasage (6), relié rigidement à la partie métallique (1) est relié à une deuxième partie métallique (7) qui délimite en direction axiale la hauteur de brasage de la fibre en verre (3).

2. Traversée étanche selon la revendication 1, caractérisée en ce que la deuxième partie métallique (7) est une patte d'attache fixée à la première partie métallique.

3. Traversée étanche selon la revendication 1, caractérisée en ce que la deuxième partie métallique (7) est un étrier en fil métallique fixé à la première partie métallique (1).

4. Traversée étanche selon la revendication 1, caractérisée en ce que la deuxième partie métallique (7), qui délimite la hauteur de brasage du corps de brasage (6), est une bague.

5. Traversée étanche selon la revendication 1, caractérisée en ce que la deuxième partie métallique (7), qui délimite la hauteur de brasage du corps de brasage (6), est une douille.

6. Traversée étanche selon la revendication 1, caractérisée en ce que la deuxième partie métallique (7), qui délimite la hauteur de brasage du corps de brasage (6), est une paroi.

7. Traversée étanche selon la revendication 1, caractérisée en ce que la première partie métallique (1), reliée rigidement au corps de brasage (6), est une paroi.

8. Traversée étanche selon la revendication 1, caractérisée en ce que la première partie métallique (1), reliée rigidement au corps de brasage (6), est une douille.

9. Traversée étanche (1') pour une fibre en verre (7'), comprenant une partie métallique dans laquelle la fibre est fixée par brasage dans un alésage de réception (6'), caractérisée en ce que la partie métallique est une douille métallique (3') dont la paroi intérieure présente, sur une partie de la longueur de l'alésage de réception (6'), un revêtement (10) inapte au brasage et en ce que, dans la zone de la partie de longueur inapte au brasage de l'alésage de réception (6'), la brasure (11) entoure de façon hermétiquement fermée la fibre en verre (7') nue, non métallisée, alors que par contre, dans la zone de la partie de la longueur apte au brasage de l'alésage de réception (6'), la brasure (11) est rigidement reliée à la paroi intérieure de l'alésage de réception (6').

10. Traversée étanche selon la revendication 9, caractérisée en ce que le revêtement (10) recouvre la paroi intérieure de la partie de l'alésage de réception (6') qui est située du côté d'introduction de la fibre (7').

11. Traversée étanche selon la revendication 9, caractérisée en ce que le revêtement (10) recouvre la paroi intérieure de la partie de l'alésage de réception (6') qui est opposée au côté d'introduction de la fibre (7').

12. Traversée étanche selon l'une des revendications 9 à 11, caractérisée en ce que le revêtement (10) est composé de vernis d'arrêt de brasure.

13. Traversée étanche selon l'une des revendications 9 à 11, caractérisée en ce que le revêtement (10) est compose d'une surface oxydée de l'alésage de réception (6').

14. Traversée étanche (1') pour une fibre en verre (7') passant à travers une partie métallique, dans laquelle la fibre est fixée par brasage dans un alésage de réception (6'), caractérisée en ce que la partie métallique est une douille métallique (3') qui présente un évidement (12) laissant partiellement libre un alésage de réception (6'), et en ce que, dans la zone de l'évidement (12), la brasure (11) entoure de façon hermétiquement fermée la fibre en verre (7') nue, non métallisée, alors que par contre, dans la zone exempte d'évidement de l'alésage de réception (6'), la brasure (11) est rigidement reliée à la paroi intérieure de l'alésage de réception (6').

15. Traversée étanche selon la revendication 14, caractérisée en ce que l'évidement (12) est disposé dans la partie avant de la douille métallique (3') contenant l'alésage de réception (6').

16. Traversée étanche selon la revendication 14, caractérisée en ce que l'évidement (12) est disposé dans la partie arrière de la douille métallique (3') contenant l'alésage de réception (6').

17. Traversée étanche selon l'une des revendications 14 à 16, caractérisée en ce que l'évidement (12) est une fente qui s'étend dans la direction axiale de l'alésage de réception (6').

18. Traversée étanche selon l'une des revendications 14 à 16, caractérisée en ce que l'évidement (12) est composé d'une entaille qui réduit la section transversale de la douille métallique (3').

Fig.1

Fig. 2

Fig.3

Fig.4

Fig.5

Fig.6

Fig.7

Fig.8

Fig.9

Fig.10

Fig.11

Fig.12